(19) Europäisches Patentamt
European Patent Office
Office européen des brevets

(11) Veröffentlichungsnummer: **0 205 820**
**B1**

(12) # EUROPÄISCHE PATENTSCHRIFT

(45) Veröffentlichungstag der Patentschrift: **26.10.88**

(51) Int. Cl.[4]: **C 07 F 9/38**

(21) Anmeldenummer: **86105657.0**

(22) Anmeldetag: **24.04.86**

(54) **Carboxytetralinphosphonsäuren sowie ein Verfahren zu ihrer Herstellung.**

(30) Priorität: **18.05.85 DE 3517970**

(43) Veröffentlichungstag der Anmeldung: **30.12.86 Patentblatt 86/52**

(45) Bekanntmachung des Hinweises auf die Patenterteilung: **26.10.88 Patentblatt 88/43**

(84) Benannte Vertragsstaaten: **BE CH DE FR GB IT LI NL**

(56) Entgegenhaltungen: **EP - A - 0 130 439**

(73) Patentinhaber: **HOECHST AKTIENGESELLSCHAFT, Postfach 80 03 20, D-6230 Frankfurt am Main 80 (DE)**

(72) Erfinder: **Pieper, Werner, Dr., Am Käferbruch 14, D-5014 Kerpen (DE)**

**EP 0 205 820 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die bisher unbekannten Mono- oder Dicarboxytetralinphosphonsäuren der allgemeinen Formel I

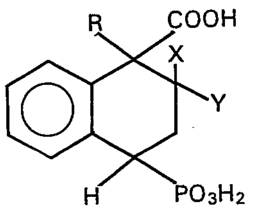

in der R Wasserstoff oder eine Alkylgruppe, X Wasserstoff oder eine Carboxylgruppe und Y Wasserstoff oder eine Alkylgruppe bedeuten, sowie ein Verfahren zur Herstellung dieser Verbindungen. Insbesondere betrifft die Erfindung 4-Carboxytetralin-1-phosphonsäure und 3,4-Dicarboxytetralin-1-phosphonsäure.

1-Phenylvinyl-1-phosphonsäure ist durch Umsetzung von Acetophenon mit Tetraphosphorhexoxid (DE-A-3 125 329) oder Phosphortrichlorid (DE-A-3 323 392) leicht zugänglich.

Die Copolymerisation von 1-Phenylvinyl-1-phosphonsäure mit anderen copolymerisierbaren ungesättigten Verbindungen ist gut bekannt. So wird z.B. in Journal of Chromatography 102, 89-94 (1974) die Herstellung von Harzen und Membranen durch radikalisch initiierte Copolymerisation von 1-Phenyl-vinyl-1-phosphonsäure mit Divinylbenzol, Acrylsäure oder Acrylnitril zitiert.

Überraschenderweise wurde nun gefunden, dass man diese neuen Verbindungen erhält, wenn man 1-Phenylvinyl-1-phosphonsäure mit einer ungesättigten Carbonsäure der allgemeinen Formel II

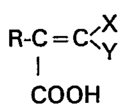

in der R Wasserstoff oder eine Alkylgruppe, X Wasserstoff oder eine Carboxylgruppe und Y Wasserstoff oder eine Alkylgruppe bedeuten, oder mit dem Anhydrid dieser ungesättigten Carbonsäure im Stoffmengenverhältnis 1:1 bis 1:4 bei Temperaturen von 120 bis 210°C umsetzt.

Insbesondere werden bei dieser Umsetzung Acrylsäure, Maleinsäure oder Maleinsäureanhydrid eingesetzt.

Vorzugsweise führt man die Umsetzung bei Temperaturen zwischen 140 und 190°C durch.

Die Dauer der Erhitzung sollte etwa 1 bis 30 Stunden betragen und sich nach der gewählten Erhitzungstemperatur richten. Carboxytetralinphosphonsäuren eignen sich für die Nachbehandlung phosphatierter Metalloberflächen.

Die Herstellung der neuen Verbindungen sei anhand der nachfolgenden Beispiele näher erläutert.

*Beispiel 1*

30 g 1-Phenylvinyl-1-phosphonsäure werden auf 180°C erhitzt und innerhalb 1 Stunde 11,6 g Acrylsäure so zugegeben, dass die Reaktionstemperatur aufrechterhalten werden kann. Nach dreistündiger Nachreaktion wird die entstandene Schmelze (40 g) in Wasser aufgenommen. Das Produkt besteht laut $^{31}$P-NMR aus den zwei isomeren Formen der 4-Carboxytetralin-1-phosphonsäure im Isomerenverhältnis von ca. 1,3 zu 1.

*Beispiel 2*

184 g 1-Phenylvinyl-1-phosphonsäure werden zusammen mit 98 g Maleinsäureanhydrid auf 180°C erhitzt und 3 Stunden bei dieser Temperatur gerührt. Das hochviskose Produkt wird in 300 ml Wasser aufgenommen. Es besteht laut $^{31}$P-NMR-Spektrum aus 3,4-Dicarboxytetralin-1-phosphonsäure neben geringen Mengen 1-Phenyltetralin-1,4-diphosphonsäure.

**Patentansprüche**

1. Mono- oder Dicarboxytetralinphosphonsäuren der allgemeinen Formel I

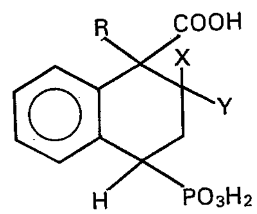

in der R Wasserstoff oder eine Alkylgruppe, X Wasserstoff oder eine Carboxylgruppe und Y Wasserstoff oder eine Alkylgruppe bedeuten.

2. 4-Carboxytetralin-1-phosphonsäure.

3. 3,4-Dicarboxytetralin-1-phosphonsäure.

4. Verfahren zur Herstellung von Carboxytetralinphosphonsäuren gemäss Anspruch 1, dadurch gekennzeichnet, dass man 1-Phenyl-vinyl-1-phosphonsäure mit einer ungesättigten Carbonsäure der allgemeinen Formel II

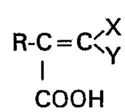

in der
R Wasserstoff oder eine Alkylgruppe,
X Wasserstoff oder eine Carboxylgruppe und
Y Wasserstoff oder eine Alkylgruppe bedeuten,
oder mit dem Anhydrid dieser ungesättigten Carbonsäure im Stoffmengenverhältnis 1:1 bis 1:4 bei Temperaturen von 120 bis 210°C umsetzt.

5. Verfahren nach Anspruch 4, dadurch gekennzeichnet, dass man als ungesättigte Carbonsäure Acrylsäure oder Maleinsäure einsetzt.

6. Verfahren nach Anspruch 4, dadurch gekennzeichnet, dass man als Anhydrid einer ungesättigten Carbonsäure Maleinsäureanhydrid einsetzt.

**Claims**

1. Mono- or dicarboxytetralinephosphonic acids of the formula I

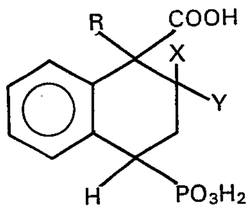

in which R denotes hydrogen or an alkyl group, X denotes hydrogen or a carboxyl group and Y denotes hydrogen or an alkyl group.

2. 4-Carboxytetraline-1-phosphonic acids.

3. 3,4-Dicarboxytetraline-1-phosphonic acid.

4. A process for the preparation of carboxytetralinephosphonic acids as claimed in claim 1, which comprises reacting 1-phenylvinyl-1-phosphonic acid with an unsaturated carboxylic acid of the formula II

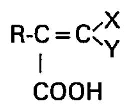

in which
R denotes hydrogen or an alkyl group,
X denotes hydrogen or a carboxyl group and
Y denotes hydrogen or an alkyl group
or with the anhydride of this unsaturated carboxylic acid in an amount ratio of 1:1 to 1:4 at temperatures from 120 to 210°C.

5. The process as claimed in claim 4, wherein the unsaturated carboxylic acid used is acrylic acid or maleic acid.

6. The process as claimed in claim 4, wherein the anhydride of the unsaturated carboxylic acid used is maleic anhydride.

**Revendications**

1. Les acides mono- ou dicarboxytétralinephosphoniques de formule générale I

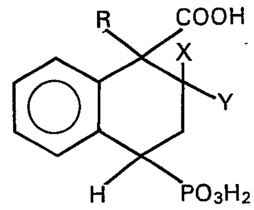

dans laquelle R représente l'hydrogène ou un groupe alkyle, X représente l'hydrogène ou un groupe carboxyle et Y représente l'hydrogène ou un groupe alkyle.

2. L'acide 4-carboxytétraline-1-phosphonique.

3. L'acide 3,4-dicarboxytétraline-1-phosphonique.

4. Procédé pour la fabrication des acides carboxytétraline-phosphoniques selon la revendication 1, caractérisé en ce que l'on fait réagir l'acide 1-phénylvinyl-1-phosphonique avec un acide carboxylique insaturé de formule générale II

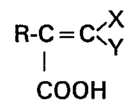

dans laquelle R représente l'hydrogène ou un groupe alkyle, X représente l'hydrogène ou un groupe carboxyle et Y représente l'hydrogène ou un groupe alkyle, ou avec l'anhydride de cet acide carboxylique insaturé dans un rapport des quantités de substances de 1:1 à 1:4 à des températures de 120 à 210°C.

5. Procédé selon la revendication 4, caractérisé en ce que l'on utilise comme acide carboxylique insaturé l'acide acrylique ou l'acide maléique.

6. Procédé selon la revendication 4, caractérisé en ce que l'on utilise comme anhydride d'acide carboxylique insaturé l'anhydride maléique.